# EUROPEAN PATENT SPECIFICATION

(11) **EP 2 202 137 B1**
(45) Date of publication and mention of the grant of the patent: **31.07.2013**
(21) Application number: 09179410.7
(22) Date of filing: 16.12.2009
(51) Int. Cl.: B62J 17/02, B62K 19/46

(54) **Motorcycle with a front charging outlet**
Motorrad mit einem vorderen Ladeanschluss
Motocyclette dotée d'une sortie de chargement avant

(30) Priority: 26.12.2008 TW 97150963
(43) Date of publication of application: 30.06.2010
(73) Proprietor: Kwang Yang Motor Co., Ltd., Kaohsiung (TW)
(72) Inventor: Lin, Tsang-Mao, 807, Kaohsiung City (TW)
(74) Representative: Hofmann, Matthias

(56) References cited:
- EP-A2- 1 738 947
- EP-A2- 1 958 858
- TW-U- M 330 674
- US-A1- 2001 047 896

## Description

This invention relates to a motorcycle, more particularly to a motorcycle having a front storage cabinet assembly provided with a charging outlet.

A motorcycle generally has a charging outlet disposed in a rear storage cabinet for charging a portable electronic device, such as a cell phone, an MP3 player, a personal digital assistant (PDA), etc. However, when the motorcycle is not in use, the rear storage cabinet is usually utilized to store articles, such as helmets, and has little space for a portable electronic device.

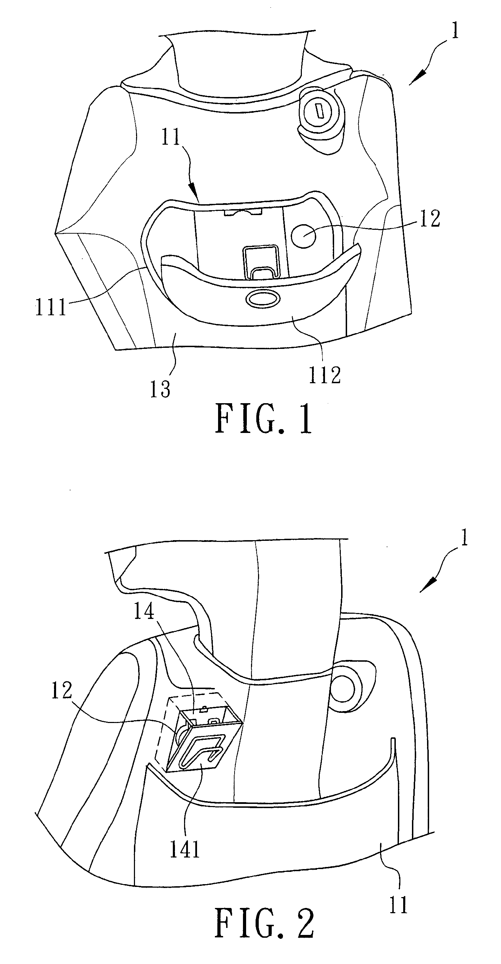

To solve the above problem, a motorcycle with a front charging outlet has been proposed. Referring to Fig. 1, a front DC power adaptor disclosed in a Taiwanese Utility Model Publication No. 330674 (considered to be the closest known prior art) is shown to include a charging outlet 12 mounted in a front storage cabinet 11 of a motorcycle 1. Since the front storage cabinet 11 is mounted on a leg shield 13 of the motorcycle 1 and has an opening 111 oriented toward the rider, if it is desired to charge an electronic device, the rider needs to open a cover 112 of the cabinet 11, and connect the electronic device to be charged to the charging outlet 12. However, due to the limited distance between the leg shield 13 and a seat (not shown) of the motorcycle, the rider has to put his/her feet on the ground when opening the cover 112 of the cabinet 12, and bend down to find the charging outlet 12 and connect the electronic device to the charging outlet 12, which is inconvenient and troublesome.

Referring to Fig. 2, another conventional motorcycle is shown to include a small charging compartment 14 which is mounted above a front storage cabinet 11, and which has a charging outlet 12 disposed therein and a cover 141 for opening and closing the compartment 14. However, the compartment 14 is too small to receive an electronic device to be charged, and a connection wire connecting the outlet 12 and the electronic device may be squeezed by the cover 141 when the cover 141 on the compartment 14 is being closed, which renders charging inconvenient.

In EP 1 958 858 A2, a vehicle is disclosed and has a cowling adapted to cover the front of the vehicle, and an inclined surface formed on a rear side of the cowling and downwardly extending toward the rear of the vehicle. The inclined surface includes a central panel on which a handle for steering is arranged, and a pair of pocket roof panels arranged on both sides thereof in the vehicle width direction. Side pocket lids are provided at lower edges of rear ends of the both left and right pocket roof panels and can open and close small article storage chambers through hinges.

An object of the present invention is to provide a motorcycle having a front cabinet that includes a charging outlet and that is disposed to receive an electronic device to be charged so as to permit convenient charging of the electronic device when the motorcycle is in use or not in use.

According to this invention, the motorcycle includes a body frame, a steering shaft swivelable about a steering axis relative to the body frame, a steering handle disposed upwardly of the body frame and coupled with the steering shaft, a front cowl disposed forwardly of the body frame, and an upper panel wall disposed between an upper edge of the front cowl and the body frame and under the steering handle and extending rearwardly to terminate at a rear edge. The upper panel wall has left and right major segments at opposite sides of the steering shaft. The motorcycle is characterized by an accommodation chamber disposed under one of left and right major segments of the upper panel wall. An access opening is formed in one of the left and right major segments, and extends downwardly to be in spatial communication with the accommodation chamber. A charging outlet is disposed in the accommodation chamber and is electrically connected to a power source of the motorcycle. A lid is disposed to open and close the access opening. The lid can be opened upwardly so that an electronic device to be charged can be conveniently placed in the accommodation chamber and connected to the charging outlet.

Other features and advantages of the present invention will become apparent in the following detailed description of the preferred embodiment of the invention, with reference to the accompanying drawings, in which:
Fig. 1 is a fragmentary perspective view of a front DC power adaptor of a motorcycle disclosed in Taiwanese Utility Model Publication No. 330674;
Fig. 2 is a fragmentary perspective view of another conventional front DC power adaptor of a motorcycle;
Fig. 3 is a fragmentaryperspective view of the preferred embodiment of a motorcycle according to this invention;
Fig. 4 is a perspective view of a front storage cabinet assembly of the preferred embodiment;
Fig. 5 is a sectional view of the front storage cabinet assembly of the preferred embodiment; and
Fig. 6 is a fragmentaryperspective view of the preferred embodiment with the front storage cabinet assembly removed therefrom.

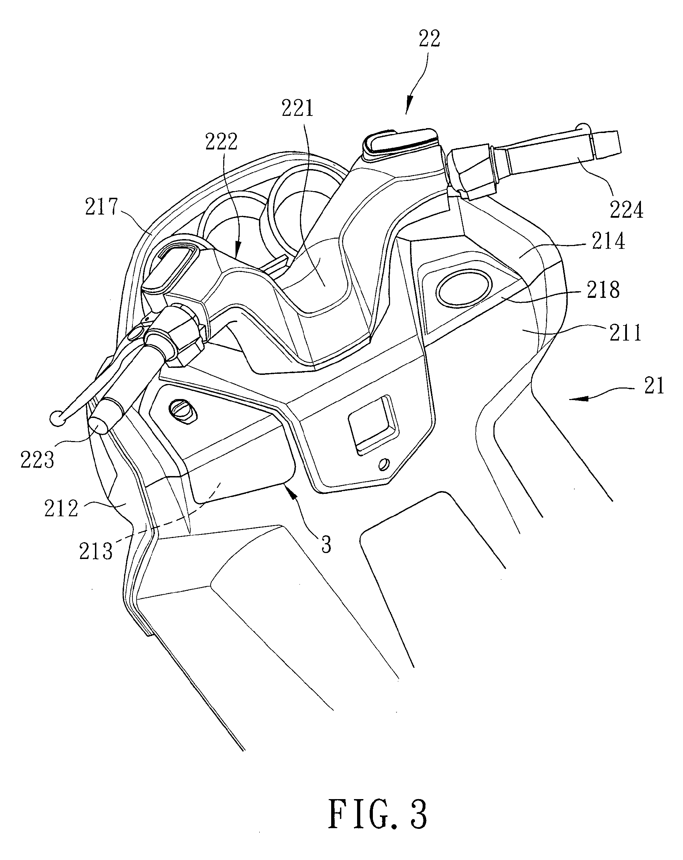

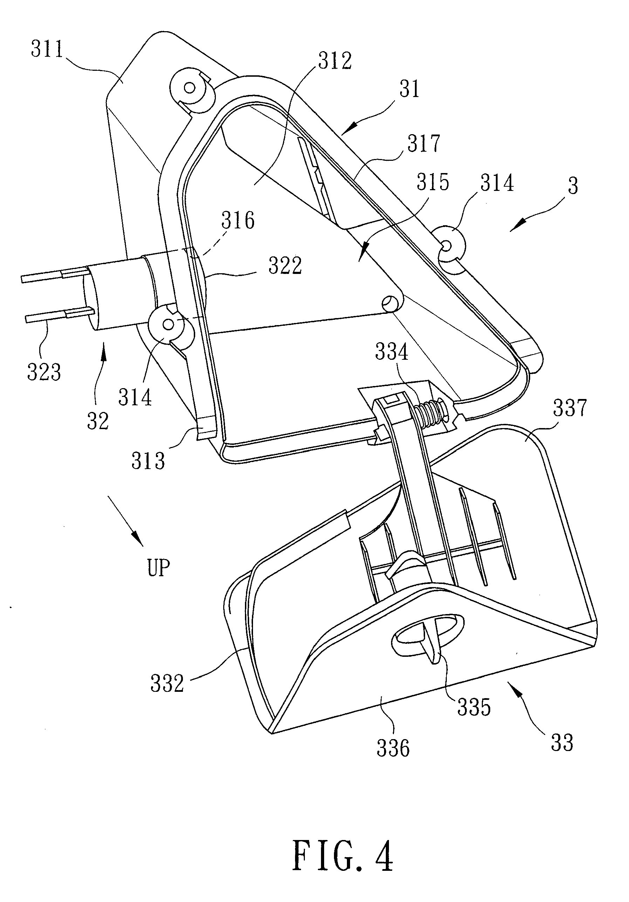

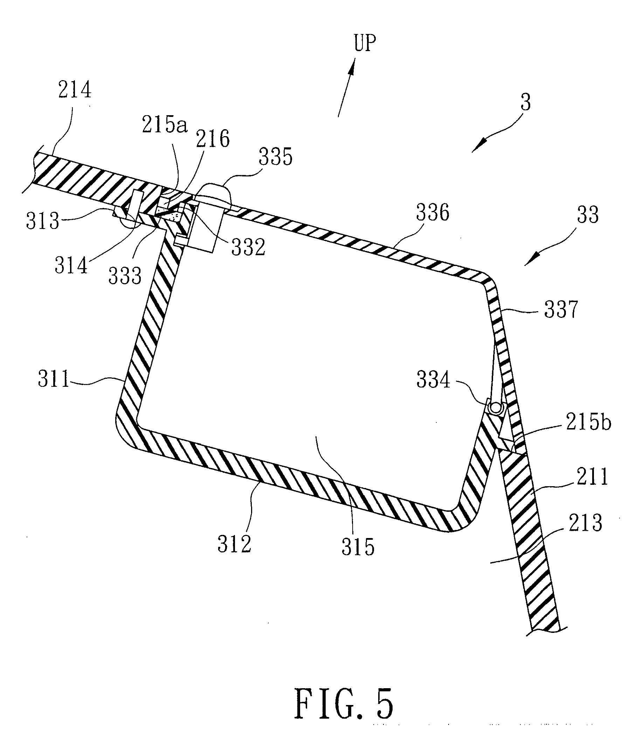

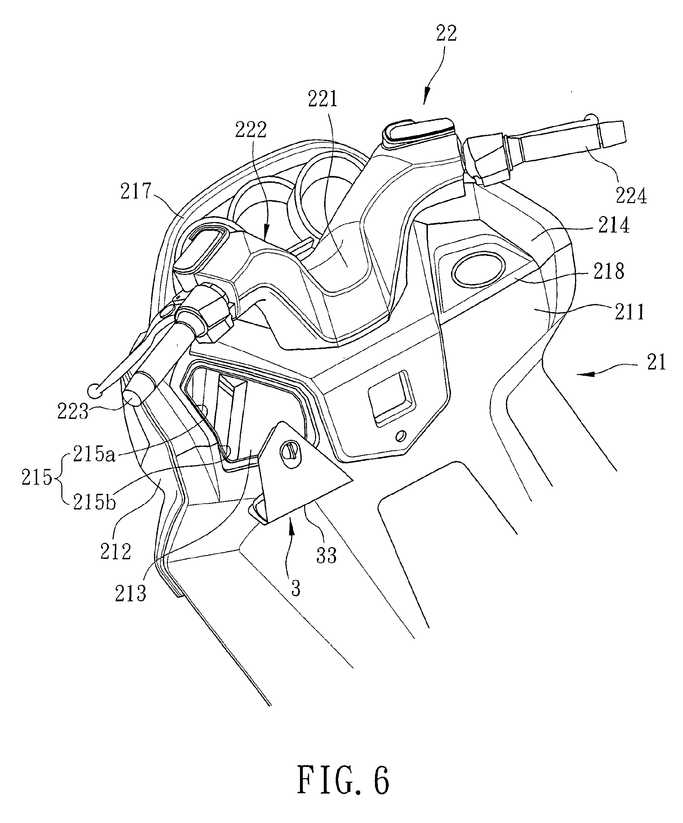

Referring to Figs. 3 to 6, the preferred embodiment of a motorcycle according to the present invention is shown to comprise a body frame 21, a handle unit 22, and a front storage cabinet assembly 3. The body frame 21 has a leg shield 211. A front cowl 212 is disposed forwardly of and is spaced apart from the leg shield 211 to define a receiving space 213 therebetween, and extends upwardly to terminate at an upper edge 217. The handle unit 22 includes a steering shaft 221 which is swivelable about a steering axis relative to the body frame 21, and a steering handle 222 which is disposed upwardly of the body frame 21, which is coupled with an upper end of the steering shaft 221, and which has left and right handgrips 223,224. An upper panel wall 214 is disposed between the upper edge 217 of the front cowl 212 and the leg shield 211 and under the steering handle 222, and extends rearwardly from the upper edge 217 to terminate at a rear edge 218 that is connected to the leg shield 211. The upper panel wall 214 has left and right major segments at the opposite sides of the upper end of the steering shaft 221.

The left major segment of the upper panel wall 214 has an access opening 215 which extends downwardly to be in spatial communication with the receiving space 213. The access opening 215 is configured to extend through the rear edge 218 to form an upwardly directed opening (215a) and downwardly into the leg shield 211 to form a rearwardly directed opening (215b). Alternatively, the access opening 215 may be formed in the right major segment of the upper panel wall 214.

The front storage cabinet assembly 3 includes a cabinet 31, a charging outlet 32, and a lid 33. The cabinet 31 is mounted in the receiving space 213, and has a surrounding wall 311 which extends upwardly to terminate at an upper peripheral edge 317 that surrounds the access opening 215, and a bottom wall 312 which extends across the surrounding wall 311. The surrounding wall 311 and the bottom wall 312 cooperatively define an accommodation chamber 315 in spatial communication with the access opening 215. A flange 313 extends outwardly from the upper peripheral edge 317 of the surrounding wall 311, and has a plurality of lugs 314. By means of screw fasteners that extend through the lugs 314, the flange 313 can abut against and be secured to a lower surface of the upper panel wall 214. Further, the surrounding wall 311 is configured to converge gradually toward the front cowl 212, and the upper peripheral edge 317 is generally triangular.

The charging outlet 32 is disposed in the receiving space 213, and has two terminals 323 extending outwardly of the surrounding wall 311 of the cabinet 31 for electrical connection to a power source (not shown) of the motorcycle, and a socket 322 which is electrically connected to the terminals 323, and which extends through a hole 316 in the surrounding wall 311 into the accommodation chamber 315.

The lid 33 is pivotably mounted on the surrounding wall 311 of the cabinet 31 proximate to a segment of the upper peripheral edge 317 bordering the rearwardly directed opening (215b) for opening and closing the access opening 215, and includes an upper lid portion 336 disposed to cover the upwardly directed opening (215a), and a rear lid portion 337 which is disposed to cover the rearwardly directed opening (215b). A biasing member 334 is disposed between the lid 33 and the surrounding wall 311 of the cabinet 31 to bias the lid 33 away from the accommodation chamber 315. In this embodiment, the biasing member 334 can bias the lid 33 to move toward the left handgrip 223 so as to expose the access opening 215. Further, a locking member 335 is disposed to lock the lid 33 to the surrounding wall 311 of the cabinet 31.

Furthermore, a watertight sealing member includes a first seal strip 332 disposed on a lower surface of the lid 33, and a second seal strip 333 disposed in a cavity 216 that is formed in the upper panel wall 214 and that surrounds the access opening 215. When the lid 33 is disposed on the upper peripheral edge 317 of the surrounding wall 311 to close the access opening 215, the first and second seal strips 332, 333 are engaged with each other to prevent ingress of water into the accommodation chamber 315.

Since the lid 33 is moved upwardly and toward the left handgrip 223 when the cabinet 31 is being opened, the lid 33 can be moved conveniently and smoothly as compared with the aforementioned conventional front storage compartment in which the cover is openable rearwardly. In addition, since the accommodation chamber 315 opens upwardly, the interior thereof can be easily seen when the lid 33 is opened. Hence, the rider can easily place an electronic device to be charged in the accommodation chamber 315 and connect the same to the socket 322 of the charging outlet 32 without the need to bend down to locate the socket 322.

## Claims

1. A motorcycle comprising:
a body frame (21);
a steering shaft (221) having an upper end, and swivelable about a steering axis relative to said body frame (21);
a steering handle (222) which is disposed upwardly of said body frame (21) and which is coupled with said upper end of said steering shaft (221);
a front cowl (212) disposed forwardly of said body frame (21), and extending upwardly to terminate at an upper edge (217);
an upper panel wall (214) which is disposed between said upper edge (217) of said front cowl (212) and said body frame (21) and under said steering handle (222), and which extends rearwardly from said upper edge (217) to terminate at a rear edge (218), said upper panel wall (214) having left and right major segments which are at opposite sides of said upper end of said steering shaft (221), one of said left and right major segments being formed with an access opening (215) which extends downwardly;
said body frame (21) having a leg shield (211) which extends downwardly from said rear edge (218) of said upper panel wall (214) and which is spaced apart from said front cowl (212) to define a receiving space (213) therebetween;
a cabinet (31) mounted in said receiving space (213) and having a surrounding wall (311) which extends upwardly to terminate at an upper peripheral edge (317) that surrounds said access opening (215), and a bottom wall (312) which extends across said surrounding wall (311), said surrounding wall (311) and said bottom wall (312) cooperatively defining an accommodation chamber (315) which is disposed under said one of said left and right maj or segments, and which is in spatial communication with said access opening (215);
a charging outlet (32) disposed in said accommodation chamber (315) and electrically connected to a power source of the motorcycle; and
a lid (33) disposed to open and close said access opening (215), wherein
said access opening (215) is configured to extend through said rear edge (218) to form an upwardly directed opening (215a) and downwardly into said leg shield (211) to form a rearwardly directed opening (215b);
said lid (33) being pivotably mounted on said surrounding wall (311) of said cabinet (31) proximate to a segment of said upper peripheral edge (317) that borders said rearwardly directed opening (215b), said lid (33) including an upper lid portion (336) which is disposed to cover said upwardly directed opening (215a), and a rear lid portion (337) which is disposed to cover said rearwardly directed opening (215b).

2. The motorcycle according to Claim 1, **characterized in that** said charging outlet (32) has two terminals (323) extending outwardly of said surrounding wall (311) for electrical connection to the power source of the motorcycle, and a socket (322) which is electrically connected to said terminals (323), which is disposed in said surrounding wall (311), and which extends into said accommodation chamber (315).

3. The motorcycle according to Claim 2, further **characterized by** a watertight sealing member (332,333) disposed between said lid (33) and said upper peripheral edge (317) of said cabinet (31) to prevent ingress of water into said accommodation chamber (315).

4. The motorcycle according to Claim 1, **characterized by** a biasing member (334) disposed between said lid (33) and said surrounding wall (311) of said cabinet (31) to bias said lid (33) away from said accommodation chamber (315).

5. The motorcycle according to Claim 4, **characterized by** a locking member (335) disposed to lock said lid (33) to said surrounding wall (311) of said cabinet (31).

6. The motorcycle according to Claim 1, **characterized in that** said surrounding wall (311) is conf igured to converge gradually toward said front cowl (212).

## Patentansprüche

1. Motorzweirad mit:
einem Fahrzeugrahmen (21);
einer Lenksäule (221), die ein oberes Ende aufweist und um eine Lenkachse relativ zum Fahrzeugrahmen (21) schwenkbar ist;
einem Lenkgriff (222), welcher oberhalb des Fahrzeugrahmens (21) angeordnet ist und welcher mit dem oberen Ende der Lenksäule (221) gekoppelt ist;
einer Frontverkleidung (212), die vor dem Fahrzeugrahmen (21) angeordnet ist und sich nach oben erstreckt und mit einer oberen Kante (217) endet;
einer oberen Wandplatte (214), welche zwischen der Oberkante (217) der Frontverkleidung (212) und dem Fahrzeugrahmen (21) und unter dem Lenkgriff (222) angeordnet ist, und welche sich von der Oberkante (217) nach hinten erstreckt, um in einer Hinterkante (218) zu enden, wobei die obere Wandplatte (214) ein linkes und ein rechtes Hauptsegment hat, welche auf gegenüberliegenden Seiten des oberen Endes der Lenksäule (221) liegen, wobei eines des linken und rechten Hauptsegments mit einer Zugriffsöffnung (215) ausgebildet ist, welche sich nach unten erstreckt;
wobei der Fahrzeugrahmen (21) ein Beinschild (211) hat, welches sich von der Hinterkante (218) der oberen Wandplatte (214) nach unten erstreckt und welches von der Frontverkleidung (212) in Abstand liegt, so dass dazwischen ein Aufnahmeraum (213) ausgebildet ist;
einem Gehäuse (31), das in dem Aufnahmeraum (213) montiert ist und aufweist eine Umgebungswand (311), welche sich nach oben erstreckt, um in einer oberen Umfangskante (317) zu enden, welche die Zugriffsöffnung (215) umschließt, und eine Bodenwand (312), welche sich über die Umgebungswand (311) hinweg erstreckt, wobei die Umgebungswand (311) und die Bodenwand (312) zusammen eine Aufnahmekammer (315) bilden, welche unter dem einen des linken und rechten Hauptsegments angeordnet ist und welche in einer räumlichen Kommunikation mit der Zugriffsöffnung (215) steht;
einem Ladeausgang (32), der in der Aufnahmekammer (315) angeordnet ist und elektrisch mit einer Spannungsquelle des Motorzweirads verbunden ist; und
einem Deckel (33), der so angeordnet ist, dass dieser die Zugriffsöffnung (215) öff net und schließt, wobei
die Zugriffsöffnung (215) so konfiguriert ist, dass sich diese erstreckt durch die Hinterkante (218) hindurch, um eine nach oben gerichtete Öffnung (215a) zu bilden, und nach unten in das Beinschild (211), um eine nach hinten gerichtete Öff nung (215b) zu bilden;
wobei der Deckel (33) schwenkbar auf der Umgebungswand (311) des Gehäuses (31) nahe einem Segment der oberen Umfangskante (317), welche die nach hinten gerichtete Öffnung (215b) begrenzt, montiert ist, wobei der Deckel (33) umfasst einen oberen Deckelbereich (336), welcher so angeordnet ist, dass dieser die nach oben gerichtete Öffnung (215a) abdeckt, und einen hinteren Deckelbereich (337), welcher so angeordnet ist, dass dieser die nach hinten gerichtete Öffnung (215b) abdeckt.

2. Motorzweirad nach Anspruch 1, **dadurch gekennzeichnet, dass** der Ladeausgang (32) zwei Anschlüsse (323) hat, die sich von der Umgebungswand (311) nach außen erstrecken, um eine elektrische Verbindung mit der Spannungsquelle des Motorzweirads herstellen zu können, und eine Fassung (322), die elektrisch mit den Anschlüssen (323) verbunden ist, die in der Umgebungswand (311) angeordnet ist und die sich in die Aufnahmekammer (315) erstreckt.

3. Motorzweirad nach Anspruch 2, ferner **gekennzeichnet durch** ein wasserdichtes Dichtungselement (332, 333), das zwischen dem Deckel (33) und der oberen Umfangskante (317) des Gehäuses (31) angeordnet ist, um das Eindringen von Wasser in die Aufnahmekammer (315) zu verhindern.

4. Motorzweirad nach Anspruch 1, **gekennzeichnet durch** ein Vorspannelement (334), das zwischen dem Deckel (33) und der Umgebungswand (311) des Gehäuses (31) angeordnet ist, um den Deckel (33) von der Aufnahmekammer (315) weg vorzuspannen.

5. Motorzweirad nach Anspruch 4, **gekennzeichnet durch** ein Verriegelungselement (335), das so angeordnet ist, dass dieses den Deckel (33) an der Umgebungswand (311) des Gehäuses (31) verriegeln kann.

6. Motorzweirad nach Anspruch 1, **dadurch gekennzeichnet, dass** die Umgebungswand (311) so konfiguriert ist, dass diese zu der Frontverkleidung (212) hin graduell konvergiert.

## Revendications

1. Motocycle comprenant :
un châssis (21) ;
un arbre de direction (221) ayant une extrémité supérieure, et pouvant pivoter autour d'un axe de direction par rapport audit châssis (21) ;
un guidon de direction (222) qui est disposé au-dessus dudit châssis (21) et qui est couplé à ladite extrémité supérieure dudit arbre de direction (221) ;
un capot avant (212) disposé en avant dudit châssis (21), et s'étendant vers le haut pour se terminer à un bord supérieur (217) ;
une paroi (214) de panneau supérieur qui est disposée entre ledit bord supérieur (217) dudit capot avant (212) et ledit châssis (21) et sous ledit guidon de direction (222), et qui s'étend vers l'arrière à partir dudit bord supérieur (217) pour se terminer à un bord arrière (218), ladite paroi (214) de panneau supérieur ayant des segments principaux gauche et droit qui sont situés à des côtés opposés de ladite extrémité supérieure dudit arbre de direction (221), l'un desdits segments principaux droit et gauche étant formé avec une ouverture d'accès (215) qui s'étend vers le bas ;
ledit châssis (21) ayant un protège-jambe (211) qui s'étend vers le bas à partir dudit bord arrière (218) de ladite paroi de panneau supérieur (214) et qui est écarté dudit capot avant (212) pour définir un espace de réception (213) entre ceux-ci ;
un coffre (31) monté dans ledit espace de réception (213) et ayant une paroi périphérique (311) qui s'étend vers le haut pour se terminer à un bord périphérique supérieur (317) qui entoure ladite ouverture d'accès (215), et une paroi de fond (312) qui s'étend à travers ladite paroi périphérique (311), ladite paroi périphérique (311) et ladite paroi de fond (312) définissant de manière coopérative une chambre de logement (315) qui est disposée sous l'un desdits segments principaux gauche et droit, et qui est en communication spatiale avec ladite ouverture d'accès (215) ;
une prise de charge (32) disposée dans ladite chambre de logement (315) et électriquement reliée à une source d'alimentation du motocycle ; et
un couvercle (33) disposé pour ouvrir et fermer ladite ouverture d'accès (215), où
ladite ouverture d'accès (215) est configurée pour s'étendre à travers ledit bord arrière (218) pour former une ouverture dirigée vers le haut (215a) et vers le bas dans ledit protège-jambe (211) pour former une ouverture dirigée vers l'arrière (215b) ;
ledit couvercle (33) étant monté en pivotement sur ladite paroi périphérique (311) dudit coffre (31) à proximité d'un segment dudit bord périphérique supérieur (317) qui délimite ladite ouverture dirigée vers l'arrière (215b), ledit couvercle (33) comportant une partie de couvercle supérieure (336) qui est disposée pour couvrir ladite ouverture dirigée vers le haut (215a), et une partie de couvercle arrière (337) qui est disposée pour couvrir ladite ouverture dirigée vers l'arrière (215b).

2. Motocycle selon la revendication 1, **caractérisé en ce que** ladite prise de charge (32) comporte deux bornes (323) s'étendant vers l'extérieur de ladite paroi périphérique (311) pour une connexion électrique avec la source d'alimentation du motocycle, et une douille (322) qui est électriquement connectée auxdites bornes (323), qui est disposée dans ladite paroi périphérique (311), et qui s'étend dans ladite chambre de logement (315).

3. Motocycle selon la revendication 2, **caractérisé en outre par** un élément d'étanchéité étanche à l'eau (332,333) disposé entre ledit couvercle (33) et ledit bord périphérique supérieur (317) dudit coffre (31) pour empêcher la pénétration de l'eau dans ladite chambre de logement (315).

4. Motocycle selon la revendication 1, **caractérisé par** un élément de sollicitation (334) disposé entre ledit couvercle (33) et ladite paroi périphérique (311) dudit coffre (31) pour solliciter ledit couvercle (33) loin de ladite chambre de logement (315).

5. Motocycle selon la revendication 4, **caractérisé par** un élément de verrouillage (335) disposé pour verrouiller ledit couvercle (33) à ladite paroi périphérique (311) dudit coffre (31).

6. Motocycle selon la revendication 1, **caractérisé en ce que** ladite paroi périphérique (311) est configurée pour converger progressivement vers ledit capot avant (212).
